# EUROPÄISCHE PATENTSCHRIFT

(11) **EP 1 448 724 B1**
(45) Veröffentlichungstag und Bekanntmachung des Hinweises auf die Patenterteilung: **31.01.2007**
(21) Anmeldenummer: 02791698.0
(22) Anmeldetag: 22.11.2002
(51) Int. Cl.: C09D 7/12

(54) **BESCHICHTUNGSMASSE ENTHALTEND NANOPARTIKEL, VERWENDUNG DER BESCHICHTUNGSMASSE UND VERFAHREN ZUR HERSTELLUNG VON BESCHICHTUNGEN**
COATING MATERIAL CONTAINING NANOPARTICLES, USE OF SAID COATING MATERIAL AND METHOD FOR THE PRODUCTION OF COATINGS
MATIERE DE REVETEMENT CONTENANT DES NANOPARTICULES, UTILISATION DE CETTE MATIERE ET PROCEDE DE PRODUCTION DE REVETEMENTS

(30) Priorität: 23.11.2001 DE 10157468
(43) Veröffentlichungstag der Anmeldung: 25.08.2004
(73) Patentinhaber: DEUTSCHE AMPHIBOLIN-WERKE VON ROBERT MURJAHN GmbH + Co. KG, 64372 Ober-Ramstadt (DE)
(72) Erfinder: MÖBUS, Helmut, 67251 Freinsheim (DE); PTATSCHEK, Volker, 63773 Goldbach (DE); BISTER, Erhard, 64846 Gross-Zimmern (DE); GLÄSEL, Hans-Jürgen, 04229 Leipzig (DE); HARTMANN, Eberhard, 04509 Priester b. Delitzsch (DE)
(74) Vertreter: Pfenning, Meinig & Partner GbR
(86) Internationale Anmeldenummer: PCT/EP2002/013156
(87) Internationale Veröffentlichungsnummer: WO 2003/044099

(56) Entgegenhaltungen:
- EP-A- 0 943 664
- DE-A- 10 004 499
- DE-A- 19 961 632

## Beschreibung

Gegenstand der Erfindung ist eine Beschichtungsmasse, welche nanoskalige, organisch modifizierte anorganische Teilchen enthält und ein Verfahren zur Herstellung solcher Schichten sowie deren Verwendung.

Bekannt sind Beschichtungsmittel, die mittels Sol-Gel-Technik hergestellt werden durch hydrolytische (Co-)Kondensation von Tetroethoxysilan (TEOS) mit weiteren Metallalkoxyden in Abwesenheit von organischen und/oder anorganischen Bindemitteln. Aus DE 199 24 644 ist bekannt, daß die Sol-Gel-Synthese auch im Medium durchgeführt werden kann. Bevorzugt eingesetzt werden strahlenhärtende Formulierungen. Alle mittels Sol-Gel-Prozess hergestellten Materialien zeichnen sich durch geringe Festkörpergehalte an anorganischer und organischer Substanz, durch erhöhte Mengen des Kondensationsprodukts (in der Regel Alkohole), durch die Anwesenheit von Wasser und durch begrenzte Lagerstablität aus.

Einen Fortschritt stellt die DE 198 46 660 dar, worin hochtemperaturbeständige, reaktive Metalloxidpartikel, hergestellt durch hydrolytische Kondensation von Metallalkoxiden auf der Oberfläche von nanoskaligen anorganischen Partikeln in Gegenwart von reaktiven Bindemitteln, beschrieben werden. Die Temperaturbeständigkeit der ausreagierten Formulierungen wird erreicht durch die heterogene Copolymerisation von reaktiven Gruppen des Mediums mit gleichartigen reaktiven Gruppen des Bindemittels. Nachteilig ist hier die Unvollständigkeit der heterogenen Copolymerisation, bei der nicht alle reaktiven Gruppen auf der Oberfläche der Partikel in die Copolymerisation eintreten. Grund sind hauptsächlich sterische Hinderungen. Bekanntermaßen führen jedoch die nicht ausreagierten Gruppen zu unerwünschten Folgereaktionen, die Verfärbungen, Versprödungen oder vorzeitigen Abbau hervorrufen können. Das gilt besonders für Hochtemperaturanwendungen. Auch das in der DE 198 46 660 beschriebene Verfahren führt zu nicht lagerstabilen Systemen bedingt durch das saure Medium in Gegenwart des Kondensationsprodukts (in der Regel Alkohole).

Bekannt sind auch nanoskalige oberflächenmodifizierte Teilchen (Degussa Aerosil R 7200), die durch Kondensation von Metallalkoxiden mit Silanen in Abwesenheit eines Bindemittels und somit in Abwesenheit von starken Scherkräften entstanden sind, wie sie in viskosen

Medien bei Rührgeschwindigkeiten von ≥ 10 m/s wirken. Diese Aerosile besitzen aus diesem Grund größere Teilchen als die eingesetzten Rohstoffe, ihre Opazität idt deutlich höher und ihre Wirksamkeit ist geringer als die Wirkung der in WO 00/22052 beschriebenen Teilchen und der daraus hergestellten Lacke.

Die EP 0 943 664 A beschreibt Nanopartikel-haltige, die zwischen 0,5 und 25 Gew.-% Nanopartikel mit einer mittleren Teilchengröße unter 200 nm, wie z.B. pyrogene Kieselsäuren oder nanoskalige Oxide von Aluminium, Titan und Zirkon enthalten. Besonders bevorzugt sind Polyacrylatpolyole mit einem mittleren Molekulargewicht von 3000 bis 4000 g/mol. Die beschriebene Lackbindemittel können in Lacksystemen verwendet werden.

Die DE 199 61 632 A bezieht sich auf eine strahlenhärtbare Beschichtungsmasse auf Basis von einem oder mehreren multifunktionellen Acrylatmonomeren oder -oligomeren, die 1 bis 50 Gew.-% bezüglich des Feststoffgehalts nanoskalige Partikel von SiO₂ und/oder Metalloxiden wie Al₂O₃ mit einer Teilchengröße im Bereich zwischen 1 und 100 nm enthält. Die gehärteten Schichten bilden kratz- und abriebfeste Schichten.

Aufgabe der Erfindung ist es, die Nachteile des Standes der Technik zu beseitigen und lagerungs- und eigenschaftsstabile Beschichtungsmassen enthaltend nanoskalige anorganische Teilchen und ein verbessertes Verfahren zu dessen Herstellung zu entwickeln und neuartige Anwendungen aufzuzeigen.

Die Aufgabe wird in Bezug auf die Beschichtungsmasse durch die kennzeichnenden Merkmale des Patentanspruches 1 und in Bezug auf das Verfahren zur Herstellung durch die Merkmale des Patentanspruches 9 gelöst. Verwendung der Beschichtungsmasse ist in Patentanspruch 10 angegeben. Die Unteransprüche zeigen vorteilhafte Weiterbildungen auf.

Erfindungsgemäß wird somit eine Beschichtungsmasse vorgeschlagen, die 10 bis 80 Masse-% Nanopartikel enthält und 90 bis 20 Masse-% eines Bindemittels, wobei das Bindemittel ein Molekulargewicht von 250 bis 10000 g/Mol aufweist. Überraschenderweise konnten die Erfinder zeigen, daß derartige Beschichtungsmassen mit einem relativ hohen Anteil von Nanopartikeln (bis zu 80 Masse-%) in Kombination mit einem speziellen Bindemittel mit einem spezifisch ausgewählten Molekulargewicht lagerungs- und eigenschaftsstabil sind und daß daraus Beschichtungen hergestellt werden können, die kratz- und abriebfest sind.

Die Nanopartikel die erfindungsgemäß eingesetzt werden, sind Partikel mit einer mittleren Teilchengröße im Bereich von 1 nm bis 200 nm und sie bestehen aus Oxiden und/oder Mischoxiden von Elementen der zweiten bis vierten Hauptgruppe und/oder Elementen der ersten bis achten Nebengruppe des Periodensystems, wobei auch Lanthanide mit eingeschlossen sind.

Bevorzugt ist es dabei, wenn die Beschichtungsmasse 20 bis 40-Masse-% Nanopartikel und 80 bis 60-Masse-% des Bindemittels enthält, wobei das Molekulargewicht bevorzugt im Bereich von 250 bis 2500 g/Mol liegt. Besonders bevorzugt ist es, wenn die Beschichtungsmasse 20 bis 30-Masse-% Nanopartikel und 80 bis 70-Masse-% des Bindemittels enthält, wobei das Molekulargewicht bevorzugt im Bereich von 300 bis 1500 g/Mol liegt.

Erfindungsgemäß liegen die Nanopartikel in der vorstehend angegebenen Menge in einer bimodalen Teilchengrößenverteilung vor. Dabei hat der erste Teil der Nanopartikel eine Teilchengröße im Bereich von 1 bis 20 nm und der zweite Teil eine mittlere Teilchengröße im Bereich von 25 bis 200 nm. Wesentlich ist dabei wiederum, daß diese Nanopartikel in der bimodalen Teilchengrößenverteilung mit dem spezifischen Bindemittel wie es im Anspruch 1 definiert ist, vorliegen.

Die Nanopartikel können auch bis zu 80 Masse-%, bevorzugt bis zu 60 Masse-% durch Mikropartikel ersetzt sein. Diese Mikropartikel können auch an ihren Oberflächen durch organische Verbindungen funktionalisiert sein.

Bei der erfindungsgemäßen Beschichtungsmasse ist besonders hervorzuheben, daß die gefundenen Eigenschaften dann besonders zutage treten, wenn Nanopartikel in der Beschichtungsmasse eingesetzt werden die in ihrer Oberfläche durch Wechselwirkung mit organischen Verbindungen modifiziert sind. Bei der erfindungsgemäßen Modifizierung der organischen Nanopartikel wird aber ausdrücklich keine Modifizierung verstanden bei der organische Gruppen durch chemische Bindung an der Oberfläche angebunden sind, sondern lediglich eine Modifizierung bei der die organischen Verbindungen durch Wechselwirkung mit der Oberfläche verbunden sind. Insbesondere diese Ausführungsform hat sich als besonders bevorzugt herausgestellt.

Diejenigen Verbindungen die für die organische Modifizierung in Bezug auf die Wechselwirkung mit der Oberfläche der nanoskaligen Partikel eingesetzt werden, sind in Patentanspruch 4 und 5 definiert. Solche Verbindungen sind:
R[-Si(R' R'')-O-]ₙSi(R' R'')-R''' oder cyclo [-Si(R' R'')-O-]ᵣSi(R' R")-O-
worin
R, R', R", R"' - gleich oder verschieden voneinander einen Alkylrest mit 1 - 18 C-Atomen oder einen Arylrest oder einen Alkaryl- oder einen Aralkylrest mit 6 - 18 C-Atomen oder einen Rest der allgemeinen Formel - (CₘH₂ₘ-O)ₚ-C_{q}H_{2q+1} oder einen Rest der allgemeinen Formel -CₛH₂ₛY oder einen Rest allgemeinen Formel -XZₜ₋₁
n - eine ganze Zahl mit der Bedeutung 1 ≤ n ≤ 1000, bevorzugt 1 ≤ n ≤ 100,
m - eine ganze Zahl 0 ≤ m ≤ 12 und
p - eine ganze Zahl 0 ≤ p ≤ 60 und
q - eine ganze Zahl 0 ≤ q ≤ 40 und
r - eine ganze Zahl 2 ≤ r ≤ 10 und
s - eine ganze Zahl 0 ≤ s ≤ 18 und
Y - klassische reaktive Gruppen, beispielsweise α,β-ethylenisch ungesättigte Gruppen wie (Meth)Acryloyl-, Vinyl- oder Allylgruppen, oder klassische reaktive Gruppen wie beispielsweise Amino-, Amido-, Ureido-, Hydroxyl-, Epoxy-, Isocyanato-, Mercapto-, Sulfonyl-, Phosphonyl-, Trialkoxysilyl-, Alkyldialkoxysilyl-, Dialkylmonoalkoxysilyl-, Anhydrid- und/oder Carboxylgruppen, Imido-, Imino-, Sulfit-, Sulfat-, Sulfonat-, Phosphin-, Phosphit-, Phosphat-, Phosphonat und
X - ein t-funktionelles Oligomer mit
t - eine ganze Zahl 2 ≤ t ≤ 8 und
Z - wiederum einen Rest R[-Si(R' R")-O-]ₙSi(R' R'')-R''' oder cyclo [-Si(R' R'')-O-]ᵣSi(R'R'')-O-
darstellt, wobei die Reste wie vorstehend definiert sind.

Das t-funktionelle Oligomer X ist dabei bevorzugt ausgewählt aus:
Oligoether, Oligoester, Oligoamid, Oligourethan, Oligoharnstoff, Oligoolefin, Oligovinylhalogenid, Oligovinylidendihalogenid, Oligoimin, , Oligovinylalkohol, Ester, Acetal oder Ether von Oligovinylalkohol, Cooligomere von Maleinsäureanhydrid, Oligomere von (Meth)acrylsäure, Oligomere von (Meth)acrylsäureestern, Oligomere von (Meth)acrylsäureamiden, Oligomere von (Meth)acrylsäureimiden, Oligomere von (Meth)acrylsäurenitril, besonders bevorzugt Oligoether, Oligoester, Oligourethane.

Beispiele für Reste von Oligoethern sind Verbindungen vom Typ - (CₐH₂ₐ-O)_{b}-CₐH₂ₐ- bzw. 0- (CₐH₂ₐ-O)_{b}-CₐH₂ₐ-O mit 2 ≤ a ≤ 12 und 1 ≤ b ≤ 60, z. B. ein Diethylenglykol-, Triethylenglykol- oder Tetraethylenglykol-Rest, ein Dipropylenglykol-, Tripropylenglykol- oder Tetrapropylenglykol-Rest, ein Dibutylenglykol-, Tributylenglykol- oder Tetrabutylenglykol-Rest.
Beispiele für Reste von Oligoestern sind Verbindungen vom Typ -C_{b}H_{2b}- (O (CO)CₐH₂ₐ- (CO)O-C_{b}H_{2b}-)_{c}- bzw. -O-C_{b}H_{2b}-(O(CO)CₐH₂ₐ-(CO)O-C_{b}H_{2b}-)_{c}-O- mit a und b unterschiedlich oder gleich 3 ≤ a ≤ 12, 3 ≤ b ≤ 12 und 1 ≤ c ≤ 30, z. B. ein Oligoester aus Hexandiol und Adipinsäure.

Wie bereits vorstehend ausgeführt, ist es besonders bevorzugt, wenn die nanoskaligen Partikel an ihrer Oberfläche mit organischen Gruppen funktionalisiert worden sind, wobei hier die Funktionalisierung so verstanden wird, daß eine chemische Anbindung der organischen Gruppen an die Oberfläche der nanoskaligen Teilchen nicht erfolgt.

Die erfindungsgemäße Beschichtungsmasse schließt jedoch auch solche Ausführungsformen mit ein, bei denen teilweise die vorstehend definierten funktionalisierten Nanopartikel durch funktionalisierte Nanopartikel ersetzt worden sind, wobei hier die organischen Gruppen chemisch reaktiv an der Oberfläche gebunden sind. Derartige modifizierte nanoskalige Partikel für Beschichtungsmassen sind ja bereits aus dem Stand der Technik bekannt. Überraschenderweise wurde dabei festgestellt, daß es dabei sogar ausreichend sein kann, wenn in der Beschichtungsmasse nur bis zu 10 Masse-% der vorstehend definierten nanoskaligen Partikel enthalten sind, d. h. solche, bei denen eine Oberflächenmodifizierung vorgenommen worden ist, wobei die organischen Gruppen lediglich über Wechselwirkungen gebunden sind. Der Rest, d. h. bis zu 90 % kann durch Nanopartikel ersetzt sein bei denen die Oberfläche funktionalisiert worden ist durch organische Gruppen die chemisch reaktiv an der Oberfläche angebunden sind. Bevorzugt werden die erfindungsgemäßen Nanopartikel bis zu 70% und besonders bevorzugt bis zu 30% durch funktionalisierte Nanopartikel ersetzt, bei denen die organischen Gruppen chemisch reaktiv an der Oberfläche gebunden sind, um bimodale Teilchengrößenverteilungen der Nanopartikel zu erhalten.

Wesentliches Element der Erfindung ist weiterhin, daß neben den vorstehen näher beschriebenen Nanopartikeln 90 bis 20 Masse-% eines organischen Bindemittels mit einem Molekulargewicht von 250 bis 10000 g/Mol enthalten ist. Der Anteil des Bindemittels ist dabei bezogen auf den Feststoffgehalt an reaktiven oder nicht reaktiven Lackbindemittel in fester, geschmolzener, gelöster oder dispergierter Form bestehend aus organischen und/oder anorganischen Polymeren, Oligomeren, Monomeren, Precursoren und/oder Mischungen hiervon. Gegebenenfalls können alle weiteren in der Lacktechnik bekannten Zusätze enthalten sein. Siehe hierzu: Lackrohstofftabellen/Erich Karsten, Vincentz-Verlag, Hannover.

### Beispiele hierfür sind:

Reaktivverdünner, Lösemittel und Colöser, Wachse, Mattierungsmittel, Gleitmittel, Entschäumer, Entlüfter, Verlaufmittel, Thixotropiermittel, Verdicker, anorganische und organische Pigmente, Füllstoffe, Haftvermittler, Korrosionsinhibitoren, UV-Stabilisatoren, HALS-Verbindungen, Radikalfänger, Antistatika, Netzmittel und/oder die je nach Art der Härtung notwendigen Katalysatoren, Cokatalysatoren, Initiatoren, Radikalbildnern, Photoinitiatoren, Photosensibilisatoren etc. zugesetzt.

Als Vertreter der einzelnen Komponenten seien hier exemplarisch genannt
a) nanoskalige Teilchen (1-200 nm):
   Organosilicasole, z. B. IPA-ST der Fa. Nissan Chemical Industries, Ltd., Organoaluminasole, z. B. Aluminasol 100 der Fa. Nissan Chemical Industries, Ltd., Organoantimonoxidsole, z. B. CELNAX^{®} CX-Z401M, Acrylat-basierende Silicasole, z. B. HIGHLINK OG^{®}103-53 der Fa. Clariant (France) S.A., nanoskalige Siliziumdioxide, z. B. pyrogene Kieselsäuren wie z. B. Aerosil 200, Aerosil TT 600 und Aerosil OX 50 der Fa. Degussa AG, nanoskalige Titandioxide, z. B. pyrogene Titandioxide wie z. B. Titandioxid P25 der Fa. Degussa AG oder z. B. Hombitec^{®} RM 300 der Fa. Sachtleben Chemie GmbH, nanoskalige Aluminiumoxide, z. B. pyrogene Aluminiumoxide wie z. B. Aluminiumoxid C der Fa. Degussa AG oder z. B. mittels Plasmaprozessen hergestellte Aluminiumoxide der Fa. Nanoproducts Corporation, weitere nanoskalige Metalloxide, die mittels physikalisch-chemischer Verfahren, wie z. B. Flammenpyrolyse oder Plasmaprozess, hergestellt werden, z. B. Zirkonoxide der Fa. inocermic GmbH oder Alumosilikate der Fa. Nanoproducts Corporation, nanoskalige Bariumsulfate, z. B. Sachtoperse^{®} HU-N der Fa. Sachtleben Chemie GmbH, Schichtsilikate, z. B. Nanofil^{®} 15 der Fa. Süd-Chemie AG und nanoskalige Böhmite, z. B. Disperal der Fa. Sasol Chemical Industries Ltd. Beispiele für die modifizierenden Verbindungen vom Typ R[-Si(R' R''')-O-]ₙSi(R' R'')-R''' oder cyclo [-Si(R' R'')-O-]ᵣSi(R' R'')-O-
      sind z. B. Hexamethyldisiloxan, Octamethyltrisiloxan, weitere homologe und isomere Verbindungen der Reihe

      SiₙOₙ₋₁ (CH₃)₂ₙ₊₂

      n - eine ganze Zahl 2 ≤ n ≤ 1000, z. B. Polydimethylsiloxan 200^{®} fluid (20 cSt).
      Hexamethyl-cyclo-trisiloxan, Octamethyl-cyclotetrasiloxan, weitere homologe und isomere Verbindungen der Reihe

      (Si-O) ᵣ(CH₃)₂ᵣ

      r - eine ganze Zahl 3 ≤ r ≤ 12,
   Dihydroxytetramethyldisiloxan Dihydroxyhexamethyltrisiloxan, Dihydroxyoctamethyltetrasiloxan, weitere homologe und isomere Verbindungen der Reihe

      HO- [(Si-O)ₙ(CH₃)₂ₙ] - Si(CH₃)₂-OH,

      oder

      HO- [(Si-O)ₙ(CH₃)₂ₙ] - [Si-O)ₘ(C₆H₅)₂ₘ]-Si (CH₃)₂- OH,

      n - eine ganze Zahl 2 ≤ n ≤ 1000, m - eine ganze Zahl 2 ≤ m ≤ 1000,
      bevorzugt sind die α,ω-Dihydroxypolysiloxane, z. B. Polydimethylsiloxan (OH-Endgruppen, 90'- 150 cSt) oder Polydimethylsiloxan-co-diphenylsiloxan (Dihydroxy-Endgruppen, 60 cSt)
   Dihydrohexamethyltrisiloxan, Dihydrooctamethyltetrasiloxan weitere homologe und isomere Verbindungen der Reihe

      H-[(Si-O)ₙ(CH₃)₂ₙ] -Si (CH₃)₂-H,

      n - eine ganze Zahl 2 ≤ n ≤ 1000,
      bevorzugt sind die α,ω-Dihydropolysiloxane, z. B. Polydimethylsiloxan (Hydrid-Endgruppen, Mₙ = 580)
   Di(hydroxypropyl)hexamethyltrisiloxan, Dihydroxypropyl)octamethyltetrasiloxan weitere homologe und isomere Verbindungen der Reihe

      HO- (CH₂)ᵤ[(Si-O)ₙ(CH₃)₂ₙ] -Si (CH₃)₂(CH₂)ᵤ-OH

      bevorzugt sind die α,ω-Dicarbinolpolysiloxane mit 3 ≤ u ≤ 18, 3 ≤ n ≤ 1000
      oder ihre Polyether-modifizierten Nachfolgeverbindungen auf Basis der Ethylenoxid (EO) und Propylenoxid (PO) als Homo- oder Mischpolymer HO- (EO/PO)ᵥ- (CH₂)ᵤ[(Si-O)ₜ(CH₃)₂ₜ] -Si(CH₃)₂(CH₂)ᵤ-(EO/PO)ᵥ-OH
      bevorzugt sind die α,ω-Di(carbinolpolyether)-polysiloxane mit 3 ≤ n ≤ 1000, 3 ≤ u ≤ 18, , 1 ≤ v ≤ 50.

   Statt α,ω-OH-Gruppen kommen ebenfalls die entsprechenden difunktionellen Verbindungen mit Epoxy-, Isocyanato-, Vinyl-, Allyl- und Di(meth)acryloyl-gruppen zum Einsatz z. B. Polydimethylsiloxan mit Vinylendgruppen (850 -1150 cSt) oder TEGORAD 2500 der Fa. Tego Chemie Service.
   Es kommen auch die Veresterungsprodukte von e-thoxylierten/propoxylierten Trisiloxanen und höheren Siloxanen mit Acrylsäurecopolymeren und / oder Maleinsäurecopolymeren als modifizierende Verbindungen in Frage z. B. BYK Silclean 3700 der Fa. Byk Chemie oder TEGO^{®} Protect 5001 der Fa. Tego Chemie Service GmbH.
   Statt α,ω-OH-Gruppen kommen ebenfalls die entsprechenden difunktionellen Verbindungen mit - NHR ' ' ' ' mit R ' ' ' ' = H oder Alkyl zum Einsatz, z. B. die allgemein bekannten Aminosiliconöle der Firmen Wacker; Dow Corning, Bayer, Rhodia etc. zum Einsatz, die statistisch auf der Polysiloxankette verteilte (Cyclo)-Alkylaminogruppen oder (Cyclo)-Alkyliminogruppen auf ihrer Polymerkette tragen.
b) mikroskalige Teilchen (> 200 nm - 200 µm)
   Kieselsäuren, z. B. Acematt^{®} OK 412 oder Acematt^{®} TS 100 der Fa. Degussa AG, Kieselgele, z. B. Syloid ED 3 der Fa. Grace GmbH, Quarzmehle, z. B. Sikron Feinstmehl SF 3000 der Fa. Quarzwerke GmbH, Cristobalitmehle, z. B. Sibelite M 3000 der Fa. SRC Sibelco, Titandioxide, z. B. Hombitan^{®} R 210 der Fa. Sachtleben Chemie GmbH, Aluminiumoxide, z. B. Martoxid DN-430 der Fa. Martinswerk GmbH, Zirkonsilikate, z. B. Zirkonsilikat 16 my der Fa. Helmut Kreutz GmbH, Kieselerden, z. B. Sillitin Z 89 der Fa. Hoffmann Mineral GmbH & Co. KG, Kieselgure, z. B. Celite 110 von World Minerals Inc., Talkum, z. B. Finntalc M 40 der Fa. Mondo Minerals Oy, Kaoline, z. B. China-Clay Grade D der Fa. Imerys, Glimmer, z. B. Mica MU-M 2/1 der Fa. Ziegler & Co. GmbH, Siliciumcarbide, z. B. Silcar G 14 der Fa, ESK-SIC GmbH, Feldspäte, z. B. Minex 2 der Fa. Unimin Canada Ltd., Wollastonite, z. B. Tremin 283-100 EST der Fa. Quarzwerke GmbH, Glasmehle, z. B. Boruvit B 200 der Fa. Ziegler & Co. GmbH, Aluminiumsilikate mit Quarz verwachsen, z. B. Siliplast 910 der Fa. Amberger Kaolinwerke Eduard Kick GmbH & Co KG, sowie alle durch Zerkleinerung oder Fällung herstellbaren mineralischen Stoffe.
   Beispiele für die modifizierenden Verbindungen vom Typ
   R [-Si (R` R'')-O-]ₙSi(R' R'')-R''' oder cyclo [-Si (R' R'')-O-]ᵣSi(R' R") -O-
   sind die unter a) beschriebenen Verbindungen.
c) Lackbindemittel für ein- und mehrkomponentige Polymersysteme, d. h. im Falle der mehrkomponentigen Polymersysteme können sowohl das Harz als auch der Härter mit den unter a) und b) beschriebenen Partikeln gefüllt sein und die vorstehend genannt aus der Lacktechnik bekannten Komponenten (S.9) beinhalten:
   ein- bis mehrfunktionelle Acrylate, bespielsweise Butylacrylat, Ethylhexylacrylat, Norbornylacrylat, Butandioldiacrylat, Hexandioldiacrylat, Dipropylenglykoldiacrylat, Tripropylenglykoldiacrylat, Trimethylolpropantriacrylat, Trimethylolpropantriethoxytriacrylat, Pentaerythritoltetraethoxytriacrylat, Pentaerythritoltetraethoxytetraacrylat, Polyetheracrylat
   Polyurethanacrylate z. B. Craynor CN 925, CN 981 der Cray Valley Kunstharze GmbH, Ebecryl EB 1290 der UCB GmbH, Laromer 8987 der BASF AG,
   Polyesteracrylate, z. B. Craynor CN 292 der Cray Valley Kunstharze GmbH, Laromer LR 8800 der BASF AG, Ebecryl EB 800 der UCB GmbH,
   Epoxyacrylate, z. B. Laromer EA 81 der BASF AG, Ebecryl EB 604 der UCB GmbH, Craynor CN104D80 der Cray Valley Kunstharze GmbH,
   dendritische Polyester/etheracrylate der Fa. Perstorp Specialtiy Chemicals AB
   Polyurethanpolymere und ihre Vorstufen in Form der Polyisocyanate, Polyole, Polyurethanprepolymere, als verkapptes Prepolymer und als ausreagierte Polyurethane in Form einer Schmelze oder Lösung. Im einzelnen sind dies:
      Polyole in Form von
         Polyethern, z. B. Polyethylenglykol 400, Voranol P 400 und Voranol CP 3055 der Dow Chemicals, Polyestern, z. B. Lupraphen 8107, Lupraphen 8109 der Elastogran GmbH, Desmophen 670 der Bayer AG, Oxyester T 1136 der Degussa AG,
         Alkydharzen, z. B. Worléekyd C 625 der Worlée Chemie GmbH,
         Polycarbonaten z. B. Desmophen C 200, hydroxylhaltigen Polyacrylaten, z. B. Desmophen A 365 der Bayer AG,
      Polyisocyanate, z. B. Desmodur N 3300, Desmodur VL, Desmodur Z 4470 der Bayer AG, Vestanat T 1890 L der Degussa AG, Rhodocoat WT 2102 der Rhodia Syntech GmbH,
      Polyurethanprepolymere, z. B. Desmodur E 4280 der Bayer AG, Vestanat EP-U 423 der Degussa AG,
      PMMA und weitere Poly(meth)alkyl-acrylate, z. B. Plexisol P 550 und Degalan LP 50/01 der Degussa AG,
      Polyvinylbutyral und andere Polyvinylacetale, z. B. Mowital B 30 HH der Clariant GmbH,
      Polyvinylacetat und seine Copolymere z. B. Vinnapas B 100/20 VLE der Wacker-Chemie GmbH.

      Bei allen Polymeren sind sowohl die aliphatischen als auch die aromatischen Varianten ausdrücklich eingeschlossen. Das Lackbindemittel kann auch so gewählt sein, daß es mit der Verbindung, die zur Funktionalisierung dient (Anspruch 5 oder 6) identisch ist.
      Anhand der folgenden Beispiele soll der erfindungsgemäße Gegenstand näher erläutert werden ohne die mögliche Vielfalt einzuschränken.

### Vergleichsbeispiel 1:

An einem Hochleistungsdissolver versehen mit einer Zahnscheibe, einem offenen, heiz- und kühlbaren Rührgefäß und einem Thermometer wird ein Gemisch aus 20 Gewichtsteilen CN 925, 10 Gewichtsteilen CN 981, 25 Gewichtsteilen Hexandioldiacrylat, 0,8 Gewichtsteilen Octamethyltrisiloxan und 0,04 Gewichtsteilen MEHQ vorgelegt, intensiv gerührt und in mehreren Portionen 45 Gewichtsteile einer Mischung aus 15 Gewichtsteilen Aerosil 200 und 30 Gewichtsteilen Martoxid DN-430 zugegeben. Bei Überschreiten einer Temperatur von 60°C wird gekühlt. Nach der vollständigen Zugabe wird 2 Stunden bei 60 °C nachgerührt. Anschließend wird der fertige Lack auf Raumtemperatur abgekühlt.

### Vergleichsbeispiel 2:

Am Hochleistungsdissolver versehen mit einer Zahnscheibe, einem offenen, heiz- und kühlbaren Rührgefäß und einem Thermometer wird ein Gemisch aus 20 Gewichtsteilen CN 925, 10 Gewichtsteilen CN 981, 20 Gewichtsteilen Trimethylolpropantriethoxytriacrylat, 1,0 Gewichtsteilen Polydimethylsiloxan (OH-Endgruppen, 90-150 cSt) und 0,04 Gewichtsteilen MEHQ vorgelegt, intensiv gerührt und in mehreren Portionen 25 Gewichtsteile Disperal und anschließend in mehreren Portionen 25 Gewichtsteile Acematt^{®} OK 412 zugegeben. Bei Überschreiten einer Temperatur von 60°C wird gekühlt. Nach der vollständigen Zugabe wird 2 Stunden bei 60 °C nachgerührt. Anschließend wird der fertige Lack auf Raumtemperatur abgekühlt.

### Beispiel 3:

Am Hochleistungsdissolver versehen mit einer Zahnscheibe, einem offenen, heiz- und kühlbaren Rührgefäß und einem Thermometer wird ein Gemisch aus 25 Gewichtsteilen Laromer 8987, 30 Gewichtsteilen Hexandioldiacrylat, 2,5 Gewichtsteilen Polydimethylsiloxan (Vinyl-Endgruppen, 850-1150 cSt) und 0,04 Gewichtsteilen MEHQ vorgelegt, intensiv gerührt und 45 Gewichtsteile einer Mischung aus 25 Gewichtsteilen Aerosil OX 50 und 20 Gewichtsteilen Titandioxid P 25 in mehreren Portionen zugegeben. Bei Überschreiten einer Temperatur von 60°C wird gekühlt. Nach der vollständigen Zugabe wird 2 Stunden bei 60°C nachgerührt. Anschließend wird der fertige Lack auf Raumtemperatur abgekühlt.

### Beispiel 4:

Am Hochleistungsdissolver versehen mit einer Zahnscheibe, einem offenen, heiz- und kühlbaren Rührgefäß und einem Thermometer wird ein Gemisch aus 25 Gewichtsteilen EB 1290, 30 Gewichtsteilen Dipropylenglykoldiacrylat, 2,0 Gewichtsteilen Octamethylcyclotetrasiloxan und 0,04 Gewichtsteilen MEHQ vorgelegt, intensiv gerührt und 45 Gewichtsteile einer Mischung aus 20 Gewichtsteilen Aerosil TT 600 5 Gewichtsteilen Hombitec^{®} RM 300 und 20 Gewichtsteilen Sibelite M 3000 in mehreren Portionen zugegeben. Bei Überschreiten einer Temperatur von 60°C wird gekühlt. Nach der vollständigen Zugabe wird 2 Stunden bei 60 °C nachgerührt. Anschließend wird der fertige Lack auf Raumtemperatur abgekühlt.

### Beispiel 5:

Am Hochleistungsdissolver versehen mit einer Zahnscheibe, einem offenen, heiz- und kühlbaren Rührgefäß und einem Thermometer wird ein Gemisch aus 30 Gewichtsteilen EB 1290, 20 Gewichtsteilen Dipropylenglykoldiacrylat 15 Gewichtsteilen Trimethylolpropantriacrylat, 0,5 Gewichtsteilen Polydimethylsiloxan 200^{®} fluid (20 cSt)und 0,04 Gewichtsteilen MEHQ vorgelegt, intensiv gerührt und in mehreren Portionen 25 Gewichtsteile Aluminiumoxid C und anschließend 10 Gewichtsteile Highlink^{®} OG 103-53 zugegeben. Bei Überschreiten einer Temperatur von 60°C wird gekühlt. Nach der vollständigen Zugabe wird 2 Stunden bei 60 °C nachgerührt. Anschließend wird der fertige Lack auf Raumtemperatur abgekühlt.

### Vergleichsbeispiel 6:

An einem Hochleistungsdissolver versehen mit einer Zahnscheibe, einem offenen, heiz- und kühlbaren Rührgefäß und einem Thermometer wird ein Gemisch aus 15 Gewichtsteilen CN 925, 15 Gewichtsteilen CN 292, 25 Gewichtsteilen Tripropylenglykoldiacrylat, 2,0 Gewichtsteilen Byk Silclean 3700 und 0,04 Gewichtsteilen MEHQ vorgelegt, intensiv gerührt und in mehreren Portionen 15 Gewichtsteile Nanofil^{®} 15 und anschließend 30 Gewichtsteile Sillitin Z 89 zugegeben. Bei Überschreiten einer Temperatur von 60°C wird gekühlt. Nach der vollständigen Zugabe wird 2 Stunden bei 60 °C nachgerührt. Anschließend wird der fertige Lack auf Raumtemperatur abgekühlt.

### Vergleichsbeipiel 7:

Am Hochleistungsdissolver versehen mit einer Zahnscheibe, einem offenen, heiz- und kühlbaren Rührgefäß und einem Thermometer wird ein Gemisch aus 25 Gewichtsteilen EB 1290, 20 Gewichtsteilen Dipropylenglykoldiacrylat 15 Gewichtsteilen Pentaerythritoltetraethoxytetraacrylat, 1,5 Gewichtsteilen Polydimethylsiloxan-co-diphenylsiloxan (OH-Endgruppen, 60 cSt) und 0,04 Gewichtsteilen MEHQ vorgelegt, intensiv gerührt und in mehreren Portionen 15 Gewichtsteile Aerosil 200 und anschließend 15 Gewichtsteile Sachtoperse^{®} HU-N zugegeben. Bei Überschreiten einer Temperatur von 60°C wird gekühlt. Nach der vollständigen Zugabe wird 2 Stunden bei 60 °C nachgerührt. Anschließend wird der fertige Lack auf Raumtemperatur abgekühlt.

### Vergleichsbeispiel 8:

An einem Hochleistungsdissolver versehen mit einer Zahnscheibe, einem offenen, heiz- und kühlbaren Rührgefäß und einem Thermometer wird ein Gemisch aus 20 Gewichtsteilen Laromer 8800, 10 Gewichtsteilen CN 981, 25 Gewichtsteilen Hexandioldiacrylat, 1,5 Gewichtsteilen Polydimethylsiloxan (Hydrid-Endgruppen, Mₙ = 580) und 0,04 Gewichtsteilen MEHQ vorgelegt, intensiv gerührt und in mehreren Portionen 20 Gewichtsteile Aerosil 200 zugegeben. Bei Überschreiten einer Temperatur von 60°C wird gekühlt. Nach der vollständigen Zugabe wird 2 Stunden bei 60 °C nachgerührt. Anschließend wird auf Raumtemperatur abgekühlt und der Lack unter Rühren mit 25 Gewichtsteilen IPA-ST versetzt. Das Isopropanol wird anschließend destillativ abgetrennt.

### Vergleichsbeispiel 9:

An einem Hochleistungsdissolver versehen mit einer Zahnscheibe, einem offenen, heiz- und kühlbaren Rührgefäß und einem Thermometer wird ein Gemisch aus 75 Gewichtsteilen Desmophen 670 und 1,0 Gewichtsteilen Polydimethylsiloxan 200^{®} fluid (20 cSt) vorgelegt, intensiv gerührt und in mehreren Portionen 25 Gewichtsteile Disperal zugegeben. Bei Überschreiten einer Temperatur von 60°C wird gekühlt. Nach der vollständigen Zugabe wird 2 Stunden bei 60 °C nachgerührt. Anschließend wird der Lack auf Raumtemperatur abgekühlt.

## Patentansprüche

1. Beschichtungsmasse enthaltend Nanopartikel und ein organisches Bindemittel sowie gegebenenfalls Zusatzstoffe und Additive,
**dadurch gekennzeichnet,**
**daß** sie 10 - 80 - Masse-% Nanopartikel und/oder Agglomerate dieser Partikel mit einer mittleren Teilchengröße im Bereich von 1 nm bis 200 nm aus Oxiden und/oder Mischoxiden von Elementen der zweiten bis vierten Hauptgruppe und/oder Elementen der ersten bis achten Nebengruppe des Periodensystems einschließlich der Lanthaniden und entsprechend 90. - 20 -Masse-% eines organischen Bindemittels mit einem Molekulargewicht von 250 bis 10.000 g/mol enthalten, wobei
die Nanopartikel in bimodaler Teilchengrößenverteilung vorliegen, und ein erster Teil eine mittlerer Teilchengröße im Bereich von 1 bis 20 nm und ein zweiter Teil eine mittlere Teilchengröße im Bereich von 25 bis 200 nm aufweist.

2. Beschichtungsmasse nach Patentanspruch 1, **dadurch gekennzeichnet, daß** bis zu 80 Masse-% bevorzugt bis 60 Masse-% der Nanopartikel durch Mikropartikel mit einer mittleren Teilchengröße zwischen 200 nm bis 200 µm ersetzt sind.

3. Beschichtungsmasse nach Anspruch 1 oder 2,
**dadurch gekennzeichnet, daß** die Nanopartikel an ihrer Oberfläche durch Wechselwirkung mit organischen Verbindungen nicht reaktiv modifiziert sind.

4. Beschichtungsmasse nach Anspruch 3,
**dadurch gekennzeichnet, daß** die Verbindungen ausgewählt sind aus:
R[-Si (R' R'')-O-]ₙSi(R' R'')-R''' oder cyclo [Si(R' R'')-O-]ᵣSi(R' R'')-O-
worin
R, R', R", R'" - gleich oder verschieden von einander einen Alkylrest mit 1 - 18 C-Atomen oder einen Arylrest oder einen Alkaryl- oder einen Aralkylrest mit 6 - 18 C-Atomen oder einen Rest der allgemeinen Formel - (CₘH₂ₘO)ₚ-C_{q}H_{2q+1} oder einen Rest der allgemeinen Formel - CₛH₂ₛY oder einen Rest allgemeinen Formel - XZₜ₋₁
worin
n - eine ganze Zahl mit der Bedeutung 1 ≤ n ≤ 1000
m - eine ganze Zahl 0 ≤ m ≤ 12 und
p - eine ganze Zahl 0 ≤ p ≤ 60 und
r - eine ganze Zahl 2 ≤ r ≤ 10 und
s - eine ganze Zahl 0 ≤ s ≤ 18 und
q - eine ganze Zahl 0 ≤ q ≤ 40
Y - funktionelle Gruppen, beispielsweise. α, β-ethylenisch ungesättigte.Gruppen wie (Meth)Acryloyl-, Vinyl- oder Allylgruppen, oder klassische reaktive Gruppen wie beispielsweise Amino-, Amido-, Ureido-, Hydroxyl-, Epoxy-, Isocyanato-, Mercapto-, Sulfonyl-, Phosphonyl-, Trialkoxysilyl-, Alkyldialkoxysilyl-, Dialkylmonoalkoxysilyl-, Anhydrid- und/oder Carboxylgruppen, Imido-, Imino-, Sulfit-, Sulfat-, Sulfonat-, Phosphin-, Phosphit-, Phosphat-, Phosphonat und
X - ein t-funktionel-les Oligomer mit
t - eine ganze Zahl 2 ≤ t ≤ 8 und
z - wiederum einen Rest
R[-Si(R' R")-O-]ₙSi(R' R")-R'" oder cyclo [Si(R' R")-O-]ᵣSi(R' R")-O-
darstellt, wobei die Reste wie vorstehend def niert sind.

5. Beschichtungsmasse nach Anspruch 4,
**dadurch gekennzeichnet, daß**
X - ausgewählt ist aus
Oligoether, Oligoester, Oligoamid, Oligourethan, Oligoharnstoff, Oligoolefin, Oligovinylhalogenid, Oligovinylidendihalogenid, Oligoimin, Oligovinylalkohol, Ester, Acetal oder Ether von Oligovinylalkohol, Cooligomere von Maleinsäureanhydrid, Oligomere von (Meth)acrylsäure, Oligomere von (Meth)acrylsäureestern, Oligomere von (Meth)acrylsäureamiden, Oligomere von (Meth)acrylsäureimiden, Oligomere von (Meth)acrylsäurenitril, besonders bevorzugt Oligoether, Oligoester, Oligourethane.

6. Beschichtungsmasse nach mindestens einem der Ansprüche 1 bis 5,
**dadurch gekennzeichnet, daß** bis zu 90 Masse-% der Nanopartikel durch an der Oberfläche funktionalisierte Nanopartikel, wobei die organischen Gruppen chemisch reaktiv an die Oberfläche gebunden sind, ersetzt worden sind.

7. Beschichtungsmasse nach mindestens einem der Ansprüche 1 bis 6,
**dadurch gekennzeichnet, daß** das organische Bindemittel ausgewählt ist aus Verbindungen auf Basis von ein- bis mehrfunktionellen Acrylaten, beispielsweise Butylacrylat, Butandioldiacrylat, Hexandioldiacrylat, Dipropylenglykoldiacrylat, Tripropylenglykoldiacrylat, Trimethylolpropantriacrylat, Trimethylolpropantriethoxytriacrylat, Pentaerythritoltetraethoxytriacrylat, Pentaerythritoltetraethoxytetraacrylat oder Polyurethanacrylate, Polyetheracrylate, Polyurethanacrylate, Polyesteracrylate, Epoxyacrylate, dendritische Polyester/etheracrylate, Polyurethanpolymere, Polyole, Polyisocyanate, Polyurethanprepolymere, PMMA und weitere Poly(meth)alkyl-acrylate, Polyvinylbutyral, Polyvinylacetat.

8. Beschichtungsmasse nach mindestens einem der Ansprüche 1 bis 7,
**dadurch gekennzeichnet, daß** die Zusatzstoffe und Additive ausgewählt sind aus Reaktivverdünner, Lösemittel und Colöser, Wachse, Mattierungsmittel, Gleitmittel, Entschäumer, Entlüfter, Verlaufmittel, Thixotropiermittel, Verdicker, anorganische und organische Pigmente, Füllstoffe, Haftvermittler, Korrosionsinhibitoren, UV-Stabilisatoren, HALS-Verbindungen, Radikalfänger, Antistatika, Netzmittel und/oder die je nach Art der Härtung notwendigen Katalysatoren Cokatalysatoren, Initiatoren, Radikalbildner, Fotoinitiatoren und/oder Fotosensibilisatoren.

9. Verfahren zur Herstellung von Beschichtungen, wobei einen Beschichtungsmasse nach mindestens einem der Ansprüche 1 bis 8 aufgebracht und die Beschichtungsmasse mittels IR-, UV-, α-, β-, γ- oder anderer energiereicher Strahlung gehärtet wird.

10. Verwendung der Beschichtungsmasse nach mindestens einem der Ansprüche 1 bis 8, zur Herstellung von kratz- und abriebfesten Schichten und/oder Schichten mit erhöhter chemischer oder mechanischer Belastbarkeit und/oder Barriereschichten.

## Claims

1. Coating material containing nanoparticles and an organic binding agent as well as possibly supplements and additives, **characterised in that** the same contains 10-80 mass % of nanoparticles and/or agglomerates of these particles with a median particle size within the range of 1 nm to 200 nm consisting of oxides and/or mixed oxides of elements of the second to fourth main group and/or elements of the first to eighth secondary group of the period system including the lanthanides, and accordingly 90-20 mass % of an organic binding agent with a molecular weight of 250 to 10.000 g/mol; whereby
the nanoparticles are present in bimodal particle size distribution, and a first part comprises a median particle size within the range of 1 to 20 nm, and a second part a median particle size within the range of 25 to 200 nm.

2. Coating material according to Claim 1, **characterised in that** up to 80 mass %, preferably up to 60 mass % of the nanoparticles are replaced by microparticles with a median particle size of between 200 nm and 200 µm.

3. Coating material according to Claim 1 or 2, **characterised in that** the nanoparticles are not reactively modified on their surface by interaction with organic compounds.

4. Coating material according to Claim 3, **characterised in that** the compounds are selected from: R[-Si (R'R'')-O-]ₙSi)R'R'')-R''' or cyclo[-Si(R'R'')-O-]ₙSi(R'R'')-O-
wherein
R, R', R" and R"' - equal to or different from each other - comprise an alkyl rest with 1-18 C atoms or an arylat rest or an alkaryl or an aralkyl rest with 6-18 C atoms or a rest with the general formula -(CₘH₂ₘ-O)_{P}-C_{q}H_{zq+1} or a rest with the general formula -C_{z}H_{2z}Y or a rest with the general formula -XZₜ₋₁
wherein
n - an integer with the value 1 ≤ n ≤ 1000
m - an integer 0 ≤ m ≤ 12, and
p - an integer 0 ≤ p ≤ 60, and
r - an integer 2 ≤ r ≤ 10, and
s - an integer 0 ≤ s ≤ 18, and
q - an integer 0 ≤ q ≤ 40
y - functional group, for example αᵣβ-ethylenic unsaturated groups such as (meth)acryloyl, vinyl, or allyl groups, or classic reactive groups such as for example amino, amido, ureido, hydroxyl, epoxy, isocyanato, mercapto, sulfonyl, phosphonyl, trialkoxysilyl, alkyldialkoxysilyl, dialkylmonoalkoxysilyl, anhydrid, and/or carboxyl groups, imido, imino, sulfite, sulfate, sulfonate, phosphin, phosphite, phosphate, phosphonate and
x - a t-functional oligomer with
t - an integer 2 ≤ t ≤ 8, and
z - once more represents a rest
R[-Si (R'R")-0 ]ₙSi)R'R")-R"' or cyclo[-Si(R'R")-O-].Si(R'R")-O-
whereby the rests are defined as described above.

5. Coating material according to Claim 4, **characterised in that** x - is selected from oligoether, oligoester, oligoamide, oligourethane, oligourea, oligoolefin, oligovinylhalogenide, oligovinylidendihalogenide, oligoimine, oligovinylalcohol, ester, acetal or ether of oligovinylalcohol, co-oligomers of maleic acid anhydride, oligomers of (meth)acrylic acid, oligomers of (meth)acrylic acid esters, oligomers of (meth)acrylic acid amides, oligomers of (meth)acrylic acid imides, oligomers of (meth)acrylic acid nitrile, especially preferred oligoether, oligoester, oligourethane.

6. Coating material according to at least one of the Claims 1 to 5, **characterised in that** up to 90 mass % of the nanoparticles are replaced by nanoparticles functionalised on the surface, whereby the organic groups are bound to the surface in a chemically reactive way.

7. Coating material according to at least one of the Claims 1 to 6, **characterised in that** the organic binding agent is selected from compounds based on single- to multi-functional acrylates, for example butyl acrylate, butanedioldiacylate, hexanedioldiacrylate, dipropyleneglycoldiacrylate, tripropyleneglycoldiacrylate, trimethylolpropanetriacrylate, trimethylolpropanetriethoxytriacrylate, pentaerythritoltetraethoxytriacrylate, pentaerythritoltstraethoxytetraacrylate, or polyurethaneacrylate, polyetheracrylate, polyurethaneacrylate, polyesteracrylate, epoxyacrylate, dendritic polyester/etheracrylate, polyurethane polymers, polyols, polyisocyanate, polyurethaneprepolymers, PMMA and further poly(meth)alkylacrylates, polyvinylbutyral, polyvinylacetate.

8. Coating material according to at least one of the Claims 1 to 7, **characterised in that** the supplements and additives are selected from reactive thinners, solvents and co-solvents, waxes, dulling agents, lubricating agents, de-foaming agents, venting agents, spreading agents, thixotropic agents, thickening agents, anorganic and organic pigments, fillers, adhesive agents, corrosion inhibitors, UV stabilisers, HALS compounds, radical inhibitors, anti-static agents, wetting agents and/or the catalysators that may be necessary depending of the type of curing, i.e. co-catalysers, initiators, radical forming agents, photo initiators and/or photo sensibility agents.

9. Method for the production of coatings, whereby a coating material according to at least one of the Claims 1 to 8 is applied, and the coating material is cured by means of IR, UV, α, β, γ, or another energy rich radiation.

10. Use of the coating material according to at least one of the Claims 1 to 8 for the production of scratch and wear resistant layers and/or layers with increased chemical or mechanical resistance and/or barrier layers.

## Revendications

1. Masses de revêtement contenant des nanoparticules et un liant organique ainsi que le cas échéant des additifs, **caractérisées en ce que**
elles contiennent de 10 à 80 % en poids de nanoparticules et/ou d'agglomérats de ces particules ayant une granulométrie moyenne dans la plage de 1 nm à 200 nm, constitués d'oxydes et/ou d'oxydes mixtes d'éléments du deuxième au quatrième groupe principal et/ou d'éléments du premier au huitième groupe secondaire du système périodique des éléments, y compris les lanthanides, et, de manière correspondante, de 90 à 20 % en poids d'un liant organique ayant un poids moléculaire de 250 à 10 000 g/mole, où les nanoparticules se présentent en distribution granulométrique bimodale, et une première partie présente une granulométrie moyenne dans la plage de 1 à 20 nm et une deuxième partie présente une granulométrie moyenne dans la plage de 25 à 200 nm.

2. Masses de revêtement selon la revendication 1, **caractérisées en ce que** jusqu'à 80 % en poids, de préférence 60 % en poids, des nanoparticules sont remplacés par des microparticules ayant une granulométrie moyenne entre 200 nm et 200 µm.

3. Masses de revêtement selon la revendication 1 ou 2, **caractérisées en ce que** les nanoparticules sont modifiées de manière non réactive sur leur surface par interaction avec des composés organiques.

4. Masses de revêtement selon la revendication 3, **caractérisées en ce que** les composés sont choisis parmi
R-[-Si(R'R'')-O-]ₙSi(R'R'')-R''' ou cyclo-[-Si(R'R'')-O-]ᵣSi(R'R'')-O-
où
R, R', R", R"' - identiques ou différents l'un de l'autre - représentent un radical alkyle ayant de 1 à 18 atomes de C ou un radical aryle ou un radical alkaryle ou un radical aralkyle ayant de 6 à 18 atomes de C ou un radical de formule générale -(C''H₂ₘ-O)ₚ-C_{q}H_{2q+1} ou un radical de formule générale -CₛH₂ₛY ou un radical de formule générale -XZₜ₋₁
où
n est un nombre entier avec la signification
1 ≤ n ≤ 1000
m est un nombre entier avec 0 ≤ m ≤ 12 et
p est un nombre entier avec 0 ≤ p ≤ 60 et
r est un nombre entier avec 2 ≤ r ≤ 10 et
s est un nombre entier avec 0 ≤ s ≤ 18 et
q est un nombre entier avec 0 ≤ q ≤ 40
Y représente des groupes fonctionnels, par exemple des groupes α,β-éthyléniquement insaturés comme des groupes (méth)acryloyle, vinyle ou allyle, ou des groupes réactifs classiques, comme par exemple des groupes amino, amido, uréido, hydroxyle, époxy, isocyanato, mercapto, sulfonyle, phosphonyle, trialcoxysilyle, alkyldialcoxysilyle, dialkylmonoalcoxysilyle, anhydride et/ou carboxyle, imido, imino, sulfite, sulfate, sulfonate, phosphine, phosphite, phosphate, phosphonate et
X représente un oligomère de fonctionnalité t,
t représente un nombre entier avec 2 ≤ t ≤ 8 et
z représente de nouveau un radical
R-[-Si(R'R")-O-]ₙSi(R'R")-R"' ou cyclo-[-Si(R'R")-O-]ᵣSi(R'R")-O-
où les radicaux sont définis comme précédemment.

5. Masses de revêtement selon la revendication 4, **caractérisées en ce que**
X est choisi parmi
oligoéther, oligoester, oligoamide, oligouréthane, oligo-urée, oligo-oléfine, halogénure d'oligovinyle, dihalogénure d'oligovinylidène, oligo-imine, alcool oligovinylique, ester, acétal ou éther d'alcool oligovinylique, cooligomères d'anhydride d'acide maléique, oligomères d'acide (méth)acrylique, oligomères d'esters d'acide (méth)acrylique, oligomères d'amides d'acide (méth)acrylique, oligomères d'imides d'acide (méth)acrylique, oligomères de nitrile d'acide (méth)acrylique, particulièrement préférentiellement parmi oligo-éther, oligoester, oligo-uréthanes.

6. Masses de revêtement selon au moins l'une des revendications 1 à 5, **caractérisées en ce que** jusqu'à 90 % en poids des nanoparticules ont été remplacés par des nanoparticules fonctionnalisées à la surface, les groupes organiques étant liés à la surface de manière chimiquement réactive.

7. Masses de revêtement selon au moins l'une des revendications 1 à 6, **caractérisées en ce que** le liant organique est choisi parmi les composés à base d'acrylates mono à polyfonctionnels, par exemple l'acrylate de butyle, le diacrylate de butanediol, le diacrylate d'hexanediol, le diacrylate de dipropylène glycol, le diacrylate de tripropylène glycol, le triacrylate de triméthylolpropane, le triéthoxytriacrylate de triméthylolpropane, le tétraéthoxytriacrylate de pentaérythritol, le tétraéthoxytétra-acrylate de pentaérythritol, ou les acrylates de polyuréthane, les acrylates de polyéther, les acrylates de polyuréthane, les acrylates de polyester, les acrylates époxy, les acrylates de polyester/éther dendritiques, les polymères de polyuréthane, les polyols, les polyisocyanates, les prépolymères de polyuréthane, le PMMA et autres polyalkyl(méth)acrylates, le polyvinylbutyral, l'acétate de polyvinyle.

8. Masses de revêtement selon au moins une des revendications 1 à 7,
**caractérisées en ce que** les additifs sont choisis parmi les diluants réactifs, les solvants et les cosolvants, les cires, les agents matifiants, les lubrifiants, les agents antimousses, les agents désaérants, les agents d'écoulement, les agents thixotropes, les épaississants, les pigments minéraux et organiques, les charges, les adhésifs, les inhibiteurs de corrosion, les stabilisateurs d'UV, les composés HALS, les capteurs de radicaux, les antistatiques, les agents de réticulation et/ou les catalyseurs nécessaires en fonction du type de durcissement, les cocatalyseurs, les initiateurs, les formateurs de radicaux, les photoinitiateurs, et/ou les photosensibilisants.

9. Procédé de fabrication de revêtements, où est déposée une masse de revêtement selon au moins une des revendications 1 à 8, et la masse de revêtement est durcie au moyen du rayonnement IR, UV, α, β, γ ou autre rayonnement riche en énergie.

10. Utilisation de la masse de revêtement selon au moins une des revendications 1 à 8, pour la fabrication de couches résistant aux rayures et à l'usure et/ou de couches pouvant supporter une contrainte chimique ou mécanique accrue et/ou de couches barrières.
